# EUROPÄISCHE PATENTSCHRIFT

(11) **EP 3 999 368 B1**
(45) Veröffentlichungstag und Bekanntmachung des Hinweises auf die Patenterteilung: **09.09.2026**
(21) Anmeldenummer: 20743647.8
(22) Anmeldetag: 17.07.2020
(51) Int. Cl.: B60K 1/00, B60K 11/02, F01P 7/16, F01P 3/12, F01P 7/14

(54) **THERMOMANAGEMENTSYSTEM, FAHRZEUG UND VERFAHREN ZUM BETREIBEN ZWEIER KÜHLKREISLÄUFE EINES THERMOMANAGEMENTSYSTEMS**
THERMAL MANAGEMENT SYSTEM, VEHICLE AND METHOD FOR OPERATING TWO COOLING CIRCUITS OF A THERMAL MANAGEMENT SYSTEM
SYSTÈME DE GESTION THERMIQUE, VÉHICULE ET PROCÉDÉ POUR FAIRE FONCTIONNER DEUX CIRCUITS DE REFROIDISSEMENT D'UN SYSTÈME DE GESTION THERMIQUE

(30) Priorität: 17.07.2019 DE 102019210576
(43) Veröffentlichungstag der Anmeldung: 25.05.2022
(73) Patentinhaber: Schaeffler Technologies AG & Co. KG, 91074 Herzogenaurach (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE)
(74) Vertreter: Schaeffler Technologies
(86) Internationale Anmeldenummer: PCT/EP2020/070250
(87) Internationale Veröffentlichungsnummer: WO 2021/009338

(56) Entgegenhaltungen:
- EP-A1- 3 088 230
- WO-A1-2018/028299
- WO-A1-2019/022023
- CN-A- 108 437 737

## Beschreibung

Die Erfindung betrifft ein Thermomanagementsystem zur Verwendung in einem Fahrzeug. Die Erfindung betrifft ferner ein Fahrzeug mit einem solchen Thermomanagementsystem. Die Erfindung betrifft ferner ein Verfahren zum Betreiben zweier Kühlkreisläufe eines solchen Thermomanagementsystems.

Unter einem Fahrzeug ist dabei jede Art von Fahrzeug zu verstehen, welches zumindest einen ersten Kühlkreislauf zur Temperierung einer Batterie und zumindest einen zweiten Kühlkreislauf zur Temperierung eines Elektromotors und einer Leistungselektronik aufweist. Dabei kann es sich um ein teilelektrisches oder vollelektrisches Fahrzeug handeln, insbesondere aber um Personenkraftwagen und/oder Nutzfahrzeuge.

In derartigen Fahrzeugen sind zwei getrennte Kühl- bzw. Wasserkreisläufe nötig. Ein erster Kühl- bzw. Wasserkreislauf wird auf niedrigerer Temperatur zur Temperierung der Batterie betrieben, während ein zweiter Kühl- bzw. Wasserkreislauf auf höherer Temperatur zur Temperierung des Elektromotors und der Leistungselektronik betrieben wird. Komplexe Regelstrategien sind dafür verantwortlich, dass die Komponenten möglichst schnell auf ihre Optimaltemperatur aufgeheizt werden, ohne später im Betrieb zu überhitzen.

Aus der EP 2392486 B1 ist ein Thermomanagementsystem der zuvor beschriebenen Art bekannt.

Ferner ist aus der EP3088230A1 ein Thermomanagementsystem der zuvor beschriebenen Art bekannt.

Eine der Erfindung zugrunde liegende Aufgabe ist es, ein solches Thermomanagementsystem zu verbessern.

Diese Aufgabe wird durch ein gemäß Anspruch 1 unter Schutz gestelltes Thermomanagementsystem gelöst. Es wird ferner ein Fahrzeug mit einem solchen Thermomanagementsystem sowie ein Verfahren zum Betreiben des Thermomanagementsystems vorgeschlagen und unter Schutz gestellt (vgl. Ansprüche 4, 5). Des Weiteren werden ein Computerprogrammprodukt sowie ein Computerlesbares Speichermedium unter Schutz gestellt (vgl. Ansprüche 9, 10). Vorteilhafte Ausführungsformen der Erfindung sind Gegenstand der Unteransprüche.

Es wird ein Thermomanagementsystem zur Verwendung in einem Fahrzeug vorgeschlagen, wobei das Thermomanagementsystem einen ersten Kühlkreislauf für eine Batterie und einen zweiten Kühlkreislauf für einen E-Motor zum Antrieb des Fahrzeugs umfasst. Die beiden Kühlkreisläufe sind dabei mittels eines Mehrwegeventils in einem ersten Modus des Systems und in einer ersten Ventilstellung des Mehrwegeventils in Reihe (Reihenschaltungsmodus) oder in einem zweiten Modus des Systems und in einer zweiten Ventilstellung des Mehrwegeventils parallel zueinander geschaltet (Parallelschaltungsmodus).

Dabei ist das Mehrwegeventil in Gestalt eines 4/2-Wegeventils ausgebildet. Und dabei ist im zweiten Kühlkreislauf stromabwärts des E-Motors ein weiteres Mehrwegeventil vorgesehen, welches einen Kühlflüssigkeitsstrom wahlweise über einen Pfad mit einem Radiator und/oder einen dazu parallelen Pfad bzw. Bypass-Pfad zur Umgehung des Radiators leitet.

Es wird dabei vorgeschlagen, dass in einem dritten Modus des Systems und in einer dritten Ventilstellung das 4/2-Mehrwegeventil eine Zwischenstellung einnimmt bzw. in eine Zwischenstellung schaltbar ist, in welcher sich die Kühlflüssigkeitsströme der beiden Kühlkreisläufe miteinander bedarfsgerecht vermischen (bedarfsgerechter Mischmodus).

Dabei ist die dritte Ventilstellung aus einem mittleren Einstellbereich des Mehrwegeventils mit einer Vielzahl von möglichen Zwischenstellungen des Mehrwegeventils einstellbar, um eine bedarfsgerechte Vermischung der Kühlflüssigkeitsströme der Kühlkreisläufe herbeizuführen.

Bei einer solch bedarfsgerechten Vermischung lässt sich eine Abwärme bzw. Verlustwärme des E-Motorkühlkreislaufs vorteilhafterweise an den Batteriekühlkreislauf abführen, ohne dabei ein sprunghaftes Übergangsverhalten des Systems zu erfahren, welches sich als solches beim Umschalten zwischen dem Reihenschaltungsmodus und dem Parallelschaltungsmodus einstellt und sich in Form von sprunghaften Temperatur- und Druckänderungen äußert. Zudem lassen sich bei instationären Fahrten, bei denen sich der E-Motor schnell aufheizt, häufige Umschaltungen zwischen dem Reihenschaltungsmodus und dem Parallelschaltungsmodus vermeiden.

Eine solch bedarfsgerechte Vermischung verbessert demnach eine Temperaturregelung von sowohl dem E-Motorkühlkreislauf als auch dem Batteriekühlkreislauf.

Die einzelnen Zwischenstellungen können dabei gestuft (bzw. diskontinuierlich) oder stufenlos (bzw. kontinuierlich) einstellbar sein. Eine stufenlose Einstellbarkeit begünstigt dabei die Temperaturregelung von sowohl dem E-Motorkühlkreislauf als auch dem Batteriekühlkreislauf.

Dabei ist im zweiten Kühlkreislauf (bzw. E-Motorkühlkreislauf) stromabwärts des E-Motors ein weiteres Mehrwegeventil vorgesehen, welches einen Kühlflüssigkeitsstrom wahlweise über einen Pfad mit einem Radiator (bzw. Kühler) bzw. Radiatorpfad und/oder einen dazu parallelen Pfad bzw. Bypass-Pfad zur Umgehung des Radiators leitet. Auch das weitere Mehrwegeventil kann dabei gestuft oder stufenlos in eine Mehrzahl von möglichen Stellungen - d.h. End- und Zwischenstellungen - einstellbar sein. Das weitere Mehrwegeventil kann dabei in Gestalt eines 3/2-Wegeventils ausgebildet sein.

Es wird ferner ein Fahrzeug mit einem Thermomanagementsystem der zuvor beschriebenen Art vorgeschlagen.

Des Weiteren wird ein Verfahren zum Betreiben zweier Kühlkreisläufe eines Thermomanagementsystems der zuvor beschriebenen Art vorgeschlagen, bei dem ein erster Kühlkreislauf für eine Batterie und ein zweiter Kühlkreislauf für einen E-Motor zum Antrieb des Fahrzeugs vorgesehen wird. Die beiden Kühlkreisläufe werden dabei mittels eines Mehrwegeventils in einem ersten Modus des Systems und in einer ersten Ventilstellung des Mehrwegeventils in Reihe oder in einem zweiten Modus des Systems und in einer zweiten Ventilstellung des Mehrwegeventils parallel zueinander geschaltet.

Dabei wird als Mehrwegeventil ein 4/2-Wegeventil verwendet. Und dabei wird im zweiten Kühlkreislauf stromabwärts des E-Motors ein weiteres Mehrwegeventil verwendet, durch welches ein Kühlflüssigkeitsstrom wahlweise über einen Pfad mit einem Radiator und/oder einen dazu parallelen Pfad bzw. Bypass- Pfad zur Umgehung des Radiators geleitet wird.

Es wird dabei vorgeschlagen, dass in einem dritten Modus des Systems und in einer dritten Ventilstellung das Mehrwegeventil in eine Zwischenstellung geschaltet wird, in welcher die Kühlflüssigkeitsströme der beiden Kühlkreisläufe miteinander bedarfsgerecht vermischen werden.

Dabei wird die dritte Ventilstellung aus einem mittleren Einstellbereich des Mehrwegeventils mit einer Vielzahl von möglichen Zwischenstellungen des Mehrwegeventils eingestellt, um eine bedarfsgerechte Vermischung der Kühlflüssigkeitsströme der beiden Kühlkreisläufe herbeizuführen.

Die einzelnen Zwischenstellungen können dabei gestuft oder stufenlos eingestellt werden.

Dabei wird im zweiten Kühlkreislauf (bzw. E-Motorkühlkreislauf) stromabwärts des E-Motors ein weiteres Mehrwegeventil verwendet, durch welches ein Kühlflüssigkeitsstrom wahlweise über einen Pfad mit einem Radiator (bzw. Kühler) bzw. Radiatorpfad und/oder einen dazu parallelen Pfad bzw. Bypass-Pfad zur Umgehung des Radiators geleitet wird. Auch das weitere Mehrwegeventil kann dabei gestuft oder stufenlos in eine Mehrzahl von möglichen Stellungen - d.h. End- und Zwischenstellungen - eingestellt werden. Für das weitere Mehrwegeventil kann dabei ein 3/2-Wegeventil verwendet werden.

Mittels der beschriebenen Ausführungsform lassen sich zudem vorteilhafterweise ein vierter Modus und/oder ein fünfter Modus des Systems einstellen. Im vierten Modus (bzw. Bypass-Modus) des Systems lässt sich der Radiatorpfad zur Erwärmung der Batterie umgehen. Im fünften Modus des Systems hingegen lässt sich der Batteriekreislauf über den Radiatorpfad entwärmen, um eine Überhitzung der Batterie zu vermieden.

Es wird ferner ein Computerprogrammprodukt zur Durchführung des zuvor beschriebenen Verfahrens vorgeschlagen. Das Computerprogrammprodukt kann dabei mit einfachen Mitteln in eine Ansteuerelektronik bzw. Steuereinheit eingelesen und dann verwendet werden, um das besagte Thermomanagementsystem entsprechend zu steuern.

Die Ansteuerelektronik kann dabei eine mit einem Speichersystem und einem Bussystem datenverbundene digitale Mikroprozessoreinheit (CPU), einen Arbeitsspeicher (RAM) sowie ein Speichermittel besitzen. Die CPU ist ausgebildet, Befehle, die als ein in einem Speichersystem abgelegtes Programm ausgeführt sind, abzuarbeiten, Eingangssignale vom Datenbus zu erfassen und Ausgangssignale an den Datenbus abzugeben. Das Speichersystem kann verschiedene Speichermedien in Gestalt magnetischer, Festkörper- und anderer nicht-flüchtiger Medien besitzen, auf dem ein entsprechendes Computerprogramm zur Durchführung des Verfahrens sowie der vorteilhaften Ausgestaltungen gespeichert ist. Das Programm kann derart beschaffen sein, dass es die hier beschriebenen Verfahren verkörpert bzw. auszuführen imstande ist, sodass die CPU die Schritte solcher Verfahren ausführen und damit das besagte Thermomanagementsystem steuern kann

Darüber hinaus wird ein computerlesbares Speichermedium vorgeschlagen, umfassend Programmcode-Mittel bzw. Befehle, die auf dem computerlesbaren Speichermedium gespeichert sind, um das zuvor beschriebene Verfahren durchzuführen, wenn die Programmcode-Mittel bzw. Befehle auf einem Computer bzw. in einer CPU ausgeführt werden.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: ein Thermomanagementsystem in einer vorgeschlagenen Ausführung,
- Fig. 2: einen Auszug des in Fig. 1 gezeigten Thermomanagementsystems,
- Fig. 4: eine erste und zweite Veranschaulichung von Volumenströmen an einem 4/2-Wegeventil der vorgeschlagenen Ausführung,
- Fig. 5: eine dritte Veranschaulichung von Volumenströmen an einem 3/2-Wegeventil der Ausführung.

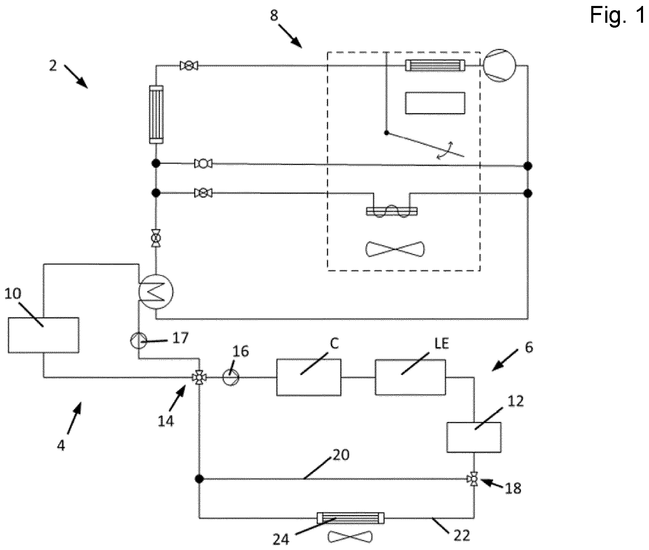

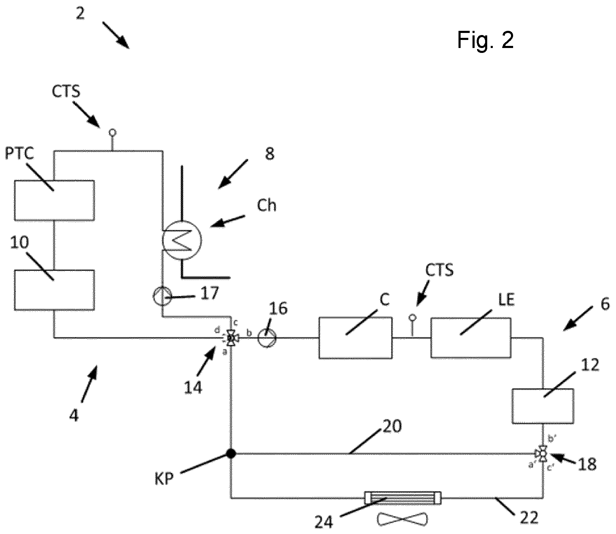

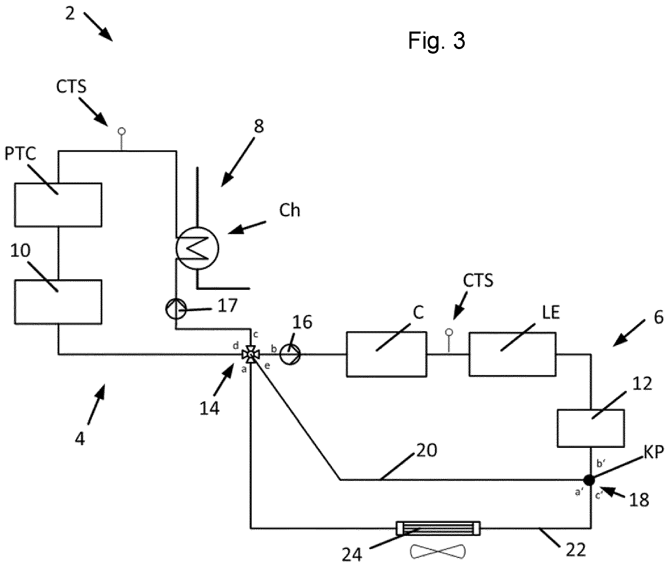

Das Thermomanagementsystem 2 nach Fig. 1 und Fig. 2 veranschaulicht einen ersten Kühlkreislauf 4 für eine Batterie 10 und einen zweiten Kühlkreislauf 6 für einen E-Motor 12 zum Antrieb des Fahrzeugs, sowie einen Kältemittelkreislauf 8 einer Klimaanlage. Bei dem Fahrzeug kann es sich dabei z.B. um ein batterieelektrisches Fahrzeug (Battery Electric Vehicle, kurz: BEV), ein Hybridelektrokraftfahrzeug (Hybrid Electric Vehicle, kurz: HEV) oder ein Brennstoffzellenfahrzeug (Fuel Cell Electric Vehicle, kurz: FCEV) handeln. Diese drei verschiedenen Kreisläufe 4, 6, 8 verschmelzen dabei gewissermaßen miteinander. In den beiden Kühlkreisläufen 4, 6 wird das jeweilige Fluid mittels einer eigenen elektrischen Pumpe 16, 17 gefördert.

Der E-Motor 12 und die Leistungselektronik LE sollen bei einer Kühlflüssigkeits- bzw. Kühlwassertemperatur von ca. 85 °C betrieben werden. Die Batterie 10 bzw. die Batteriezellen hingegen sollen in einem bestimmten Kühlflüssigkeits- bzw. Kühlwassertemperaturfenster zwischen 20 °C und 40 °C betrieben werden, denn dies stellt einen optimalen Betriebstemperaturbereich der Batterie 10 sicher. Die Temperatur der Batterie 10 bzw. der einzelnen Batteriezellen selbst kann dabei die 40 °C Temperaturschwelle durchaus überschreiten. Daher bedarf es der beiden Kühlkreisläufe 4, 6. Beide Kühlkreisläufe 4, 6 müssen Wärme sowohl aufnehmen als auch abgeben können. Während der Batteriekühlkreislauf 4 über einen Wärmtauscher Ch (vgl. Fig. 1; siehe Chiller, kurz: Ch) gegenüber dem Kältemittelkreislauf 8 entwärmt wird, kann der E-Motorkühlkreislauf 6 über einen Radiator bzw. Kühler 24 gegenüber der Umgebung entwärmt werden sowie gegenüber dem Batteriekühlkreislauf 4 über ein im Folgenden beschriebenes Mehrwegeventil 14 (Coolant Flow Control Valve, kurz: CFCV), wobei das Mehrwegeventil 14 eine Schnittstelle zwischen dem Batteriekühlkreislauf 4 und dem E-Motorkühlkreislauf 6 darstellt. Die Entwärmung des Batteriekühlkreislaufs 4 kann auch bei einer entsprechenden Ventilstellung des Mehrwegeventils 14 über den Radiator bzw. Kühler 24 erfolgen. Da aber die Batteriekühlflüssigkeit eine Temperatur von 40 °C nicht überschreiten soll, reicht meist die Entwärmung über den Radiator 24 nicht aus, so dass Wärme über den Wärmtauscher Ch abgeführt werden muss. Im E-Motorkühlkreislauf 6 ist neben dem E-Motor 12 und der Leistungselektronik LE auch noch ein Ladegerät (Charger, kurz: C) zu kühlen. Zur Regelung des jeweiligen Kühlkreislaufs 4, 6 ist je ein Temperatursensor CTS vorgesehen. Im Batteriekühlkreislauf 4 ist ferner ein Widerstandsheizer PTC vorgesehen. Der E-Motor 12 ist entweder wassergekühlt oder ölgekühlt. Im letzteren Fall ist ein entsprechender Ölkühlkreislauf des E-Motors 12 mittels eines - hier nicht dargestellten - Wärmetauschers an den Motorkühlreislauf 6 angebunden.

Mittels des Mehrwegeventils 14 lässt sich das Thermomanagementsystem 2 in unterschiedlichen Modi betreiben. Das Mehrwegeventil 14 ist dabei Teil einer sog. Aktuatoreinheit bzw. Kühlwassersteuerventileinheit, die als solche auch eine Antriebseinheit mit einem Elektrostellmotor sowie eine Steuereinheit zur Steuerung des Elektrostellmotors umfasst.

In einem **ersten Modus** des Systems (Use Case 1, kurz: UC1 = **Reihenschaltung R** mit maximaler Wärmerückgewinnung) und in einer ersten Ventilstellung des Mehrwegeventils 14 lässt sich der Kühlkreislauf 4 in Reihe zum Kühlkreislauf 6 schalten. Dabei strömt bezüglich des Mehrwegeventils 14 Kühlflüssigkeit über einen Zufluss bzw. Eingang a vom Kühlkreislauf 6 über den Abfluss bzw. Ausgang c in den Kühlkreislauf 4 und schließlich über den Zufluss bzw. Eingang d vom Kühlkreislauf 4 über den Abfluss bzw. Ausgang b zurück in den Kühlkreislauf 6.

Diese Reihenschaltung bewirkt eine schnelle Erwärmung des Batteriekühlkreislaufs 4 unter Ausnutzung der Abwärme des E-Motors 12 sowie der Leistungselektronik LE. Der E-Motorkühlkreislauf 6 hat somit auch die Funktion eines Heizkreislaufs.

In einem **zweiten Modus** des Systems (Use Case 2, kurz: UC2 = **Parallelschaltung P** mit Überhitzungsschutz) und in einer zweiten Ventilstellung des Mehrwegeventils 14 lässt sich der Kühlkreislauf 4 parallel zum Kühlkreislauf 6 schalten, so dass die beiden Kühlkreisläufe 4, 6 fluidisch voneinander getrennt sind. Diese Trennung schützt die Batterie 10 vor einer Überhitzung.

Darüber hinaus wird auch ein **dritter Modus** des Systems (Use Case 3, kurz: UC3 = **Mischmodus M** mit selektiver Wärmerückgewinnung) vorgeschlagen, in welchem das Mehrwegeventil 14 in eine Zwischenstellung - d.h. eine dritte Ventilstellung - geschaltet ist, in welcher sich die Kühlflüssigkeitsströme der beiden Kühlkreisläufe 4, 6 miteinander bedarfsweise vermischen.

Durch einen solchen Mischmodus lässt sich sowohl die Temperatur der Batterie 10 als auch die Temperatur des E-Motors 12 genauer regeln. Es unterbleiben hohe Druck- und Temperatursprünge in den beiden Kühlkreisläufen 4, 6, da ein Umschalten zwischen dem Reihenschaltungsmodus R und dem Parallelschaltungsmodus unterbleibt.

Das Mehrwegeventil 14 ist in Gestalt eines 4/2-Wegeventils ausgebildet (vgl. Fig. 1, Fig. 2), über welches sich die zuvor beschriebenen Systemmodi und Ventilstellungen einstellen bzw. ansteuern lassen. Dabei ist im Kühlkreislauf 6 stromabwärts des E-Motors 12 ferner ein weiteres Mehrwegeventil 18 in Gestalt eines 3/2-Wegeventils vorgesehen, dessen Abfluss bzw. Ausgang a^{I} mit dem Zufluss bzw. Eingang a des 4/2-Wegeventils 14 fluidisch verbunden ist. Auch das Mehrwegeventil 18 ist Teil einer weiteren Aktuatoreinheit bzw. Kühlwassersteuerventileinheit, die als solche auch eine Antriebseinheit mit einem Elektrostellmotor sowie eine Steuereinheit zur Steuerung des Elektrostellmotors umfasst.

Mittels des 3/2-Wegeventils 18 lässt sich einen Kühlflüssigkeitsstrom wahlweise über einen Pfad 22 mit einem Radiator bzw. Kühler 24 und/oder einen dazu parallelen Pfad 20 - Bypass-Pfad 20 - zur Umgehung des Radiators 24 leiten.

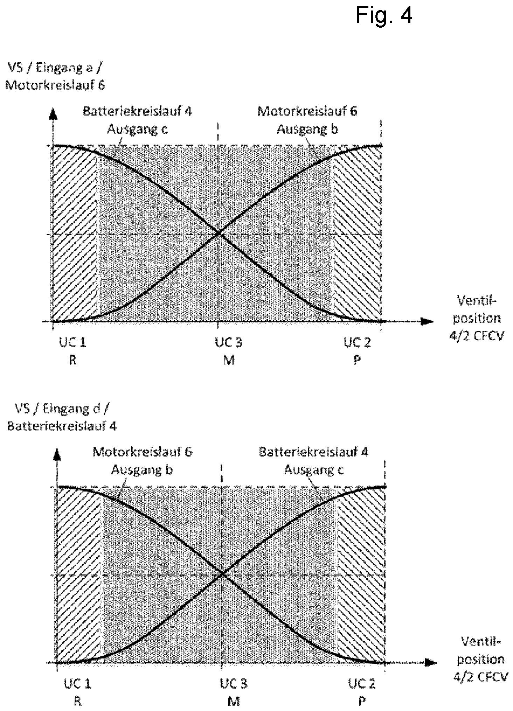

Fig. 4 veranschaulicht die in Bezug auf das 4/2-Wegeventil der beschriebenen Ausführung einstellbaren Volumenströme VS. Dabei werden in der oberen Graphik der Eingang a und die beiden Ausgänge b, c betrachtet. In der unteren Graphik hingegen werden Eingang d und die beiden Ausgänge b, c betrachtet. In den beiden Graphiken sind jeweils ein linker und rechter Bereich ohne eine signifikante Änderung bezüglich der Volumenströme dargestellt. Der linke Bereich beschreibt dabei den Modus UC1 bzw. die Reihenschaltung R. Der rechte Bereich hingegen beschreibt den Modus UC2 bzw. die Parallelschaltung P.

Zwischen diesen beiden Modi ist ein mittlerer Bereich mit einer Vielzahl von Zwischenstellungen des Ventils 14 ansteuerbar, um eine bedarfsgerechte Vermischung der Kühlflüssigkeitsströme der Kühlkreisläufe 4, 6 herbeizuführen (Mischmodus M = UC3). Grundsätzlich können dabei diskrete Zwischenstellungen gestuft eingestellt werden. Alternativ dazu können die Zwischenstellungen aber auch stufenlos bzw. kontinuierlich über den gesamten mittleren Bereich eingestellt werden, um eine noch genauere Regelung der Temperatur sowohl der Batterie 10 als auch des E-Motors 12 zu ermöglichen.

In Bezug auf die vorgeschlagene Ausführung lässt sich durch den zusätzlichen Pfad 20 in einer entsprechenden Ventilstellung des 3/2-Wegeventils 18 ein **vierter Modus** des Systems (Use Case 4, kurz: UC4 = **Bypass-Modus B** mit Reduktion des hydraulischen Widerstands & maximaler Wärmerückgewinnung) einstellen, bei dem ein hydraulischer Widerstand verringert und zugleich eine maximale Wärmerückgewinnung zur Erwärmung der Batterie 10 ermöglicht wird.

Über den Pfad 22 hingegen lässt sich zusätzlich oder alternativ dazu in einer entsprechenden Ventilstellung des 3/2-Wegeventils 18 ein **fünfter Modus** des Systems (Use Case 5, kurz: UC5 = selektiver Überhitzungsschutz) einstellen, bei dem durch eine Entwärmung über den Radiator 24 eine Überhitzung der Batterie 10 vermieden wird.

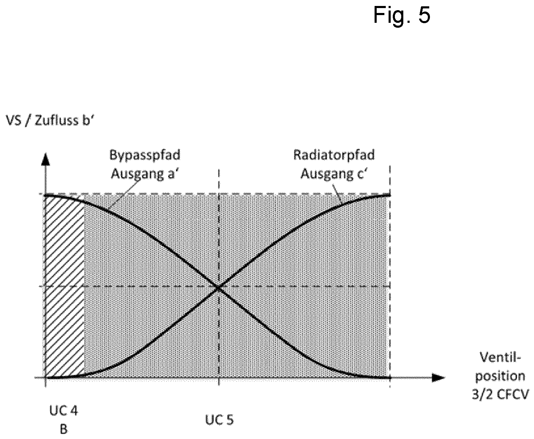

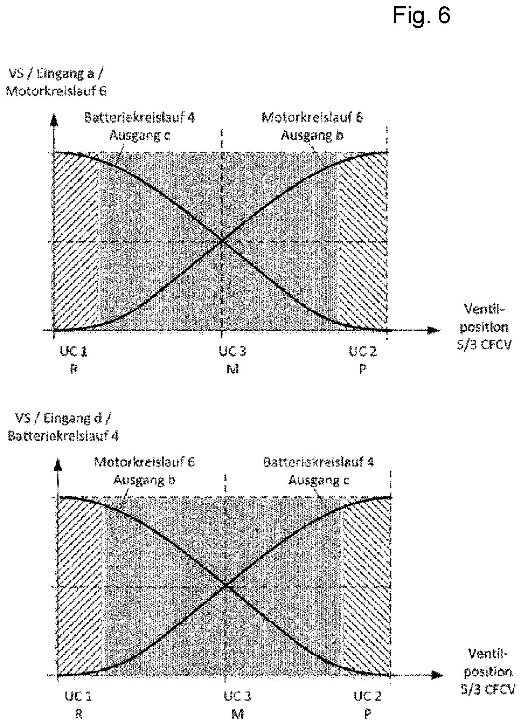

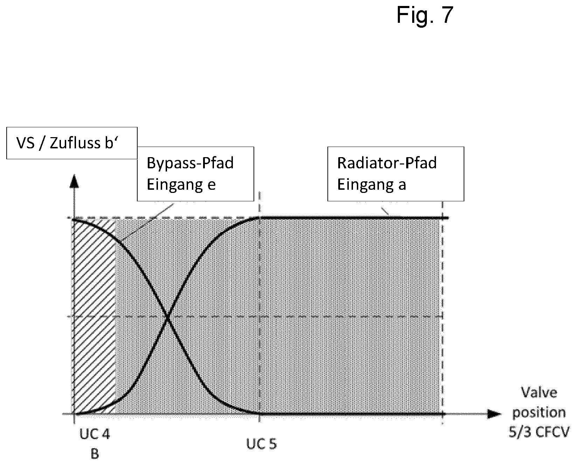

Die Graphik in Fig. 5 veranschaulicht dabei die in Bezug auf das 3/2-Wegeventil der beschriebenen Ausführung einstellbaren Volumenströme VS.. In Fig. 5 werden dabei der Eingang b^{I} und die beiden Ausgänge a^{I}, c^{I} des 3/2-Wegeventils betrachtet.

## Patentansprüche

1. Thermomanagementsystem (2) zur Verwendung in einem Fahrzeug, wobei das Thermomanagementsystem (2) einen ersten Kühlkreislauf (4) für eine Batterie (10) und einen zweiten Kühlkreislauf (6) für einen E-Motor (12) zum Antrieb des Fahrzeugs umfasst, wobei die beiden Kühlkreisläufe (4, 6) mittels eines Mehrwegeventils (14) in einem ersten Modus des Systems (2) und in einer ersten Ventilstellung des Mehrwegeventils (14) in Reihe oder in einem zweiten Modus des Systems (2) und in einer zweiten Ventilstellung des Mehrwegeventils (14) parallel zueinander schaltbar sind,
wobei das Mehrwegeventil (14) in Gestalt eines 4/2-Wegeventils ausgebildet ist und wobei im zweiten Kühlkreislauf (6) stromabwärts des E-Motors (12) ein weiteres Mehrwegeventil (18) vorgesehen ist, welches einen Kühlflüssigkeitsstrom wahlweise über einen Pfad (22) mit einem Radiator (24) und/oder einen dazu parallelen Bypass-Pfad 20 zur Umgehung des Radiators (24) leitet,
**dadurch gekennzeichnet, dass**
in einem dritten Modus des Systems (2) und in einer dritten Ventilstellung das 4/2-Mehrwegeventil (14) in eine Zwischenstellung schaltbar ist,
in welcher sich die Kühlflüssigkeitsströme der beiden Kühlkreisläufe (4, 6) miteinander bedarfsgerecht vermischen, wobei die dritte Ventilstellung aus einem mittleren Einstellbereich des Mehrwegeventils (14) mit einer Vielzahl von möglichen Zwischenstellungen des Mehrwegeventils (14) einstellbar ist, um eine bedarfsgerechte Vermischung der Kühlflüssigkeitsströme der Kühlkreisläufe (4, 6) herbeizuführen (M = UC3).

2. Thermomanagementsystem (2) nach Anspruch 1, **dadurch gekennzeichnet, dass** das weitere Mehrwegeventil (18) in Gestalt eines 3/2-Wegeventils ausgebildet ist.

3. Thermomanagementsystem (2) nach Anspruch 1 oder 2, **dadurch gekennzeichnet, dass** die einzelnen Zwischenstellungen gestuft oder stufenlos einstellbar sind.

4. Fahrzeug mit einem Thermomanagementsystem (2) nach einem der Ansprüche 1 bis 3.

5. Verfahren zum Betreiben zweier Kühlkreisläufe (4, 6) eines Thermomanagementsystems (2) nach einem der Ansprüche 1 bis 3, wobei ein erster Kühlkreislauf (4) für eine Batterie (10) und ein zweiter Kühlkreislauf (6) für einen E-Motor (12) zum Antrieb des Fahrzeugs vorgesehen wird, wobei die beiden Kühlkreisläufe (4, 6) mittels eines Mehrwegeventils (14) in einem ersten Modus des Systems (2) und in einer ersten Ventilstellung des Mehrwegeventils (14) in Reihe oder in einem zweiten Modus des Systems (2) und in einer zweiten Ventilstellung des Mehrwegeventils (14) parallel zueinander geschaltet werden,
wobei als Mehrwegeventil (14) ein 4/2-Wegeventil verwendet wird und wobei im zweiten Kühlkreislauf (6) stromabwärts des E-Motors (12) ein weiteres Mehrwegeventil (18) verwendet wird, durch welches ein Kühlflüssigkeitsstrom wahlweise über einen Pfad (22) mit einem Radiator (24) und/oder einen dazu parallelen Bypass- Pfad 20 zur Umgehung des Radiators (24) geleitet wird,
**dadurch gekennzeichnet, dass**
in einem dritten Modus des Systems (2) und in einer dritten Ventilstellung das 4/2-Mehrwegeventil (14) in eine Zwischenstellung geschaltet wird, in welcher die Kühlflüssigkeitsströme der beiden Kühlkreisläufe (4, 6) miteinander bedarfsgerecht vermischt werden, wobei die dritte Ventilstellung aus einem mittleren Einstellbereich des Mehrwegeventils (14) mit einer Vielzahl von möglichen Zwischenstellungen des Mehrwegeventils (14) eingestellt wird, um eine bedarfsgerechte Vermischung der Kühlflüssigkeitsströme der beiden Kühlkreisläufe (4, 6) herbeizuführen (M = UC3).

6. Verfahren nach Anspruch 5, **dadurch gekennzeichnet, dass** für das weitere Mehrwegeventil (18) ein 3/2-Wegeventil verwendet wird.

7. Verfahren nach Anspruch 5 oder 6, **dadurch gekennzeichnet, dass** die einzelnen Zwischenstellungen gestuft oder stufenlos eingestellt werden.

8. Verfahren nach einem der Ansprüche 5 bis 7, **dadurch gekennzeichnet, dass** ein vierter Modus (bzw. Bypass-Modus) und/oder ein fünfter Modus des Systems eingestellt wird, wobei im vierten Modus zur Erwärmung der Batterie (10) Kühlflüssigkeit über den Bypass-Pfad (20) geleitet wird, wohingegen im fünften Modus zur Entwärmung der Batterie (10) Kühlflüssigkeit über den Radiatorpfad (22) geleitet wird.

9. Computerprogrammprodukt, umfassend Befehle, die bei der Ausführung des Programms durch einen Computer diesen veranlassen, das Verfahren nach einem der Ansprüche 5 bis 8 auszuführen.

10. Computerlesbares Speichermedium, umfassend Befehle, die bei der Ausführung durch einen Computer diesen veranlassen, das Verfahren nach einem der Ansprüche 5 bis 8 auszuführen.

## Claims

1. Thermal management system (2) for use in a vehicle, wherein the thermal management system (2) comprises a first cooling circuit (4) for a battery (10) and a second cooling circuit (6) for an electric motor (12) for driving the vehicle, wherein the two cooling circuits (4, 6) can be connected to each other in series by means of a multi-way valve (14) in a first mode of the system (2) and in a first valve position of the multi-way valve (14) or in parallel in a second mode of the system (2) and in a second valve position of the multi-way valve (14),
wherein the multi-way valve (14) is designed in the form of a 4/2-way valve and wherein a further multi-way valve (18) is provided in the second cooling circuit (6) downstream of the electric motor (12), which conducts a coolant flow optionally via a path (22) with a radiator (24) and/or via a bypass path 20 parallel thereto for bypassing the radiator (24),
**characterized in that**
in a third mode of the system (2) and in a third valve position, the 4/2-multi-way valve (14) can be switched into an intermediate position
in which the coolant flows of the two cooling circuits (4, 6) are mixed with each other as needed, wherein the third valve position can be set from a middle setting area of the multi-way valve (14) with a multiplicity of possible intermediate positions of the multi-way valve (14) in order to bring about a needs-based mixing of the coolant flows of the cooling circuits (4, 6) (M = UC3).

2. Thermal management system (2) according to Claim 1, **characterized in that** the further multi-way valve (18) is designed in the form of a 3/2-way valve.

3. Thermal management system (2) according to Claim 1 or 2, **characterized in that** the individual intermediate positions can be set in increments or infinitely variably.

4. Vehicle with a thermal management system (2) according to one of Claims 1 to 3.

5. Method for operating two cooling circuits (4, 6) of a thermal management system (2) according to one of Claims 1 to 3, wherein a first cooling circuit (4) is provided for a battery (10) and a second cooling circuit (6) for an electric motor (12) for driving the vehicle, wherein the two cooling circuits (4, 6) are connected to each other in series by means of a multi-way valve (14) in a first mode of the system (2) and in a first valve position of the multi-way valve (14) or in parallel in a second mode of the system (2) and in a second valve position of the multi-way valve (14),
wherein the multi-way valve (14) used is a 4/2-way valve and wherein a further multi-way valve (18) is used in the second cooling circuit (6) downstream of the electric motor (12), which conducts a coolant flow optionally via a path (22) with a radiator (24) and/or via a bypass path 20 parallel thereto for bypassing the radiator (24),
**characterized in that**
in a third mode of the system (2) and in a third valve position, the 4/2-multi-way valve (14) is switched into an intermediate position in which the coolant flows of the two cooling circuits (4, 6) are mixed with each other as needed, wherein the third valve position is set from a middle setting area of the multi-way valve (14) with a multiplicity of possible intermediate positions of the multi-way valve (14) in order to bring about a needs-based mixing of the coolant flows of the two cooling circuits (4, 6) (M = UC3).

6. Method according to Claim 5, **characterized in that** a 3/2-way valve is used for the further multi-way valve (18).

7. Method according to Claim 5 or 6, **characterized in that** the individual intermediate positions are set in increments or infinitely variably.

8. Method according to one of Claims 5 to 7, **characterized in that** a fourth mode (or bypass mode) and/or a fifth mode of the system is set, wherein, in the fourth mode, coolant is conducted via the bypass path (20) for heating the battery (10), whereas, in the fifth mode, coolant is conducted via the radiator path (22) for cooling the battery (10).

9. Computer program product comprising commands which, when the program is executed by a computer, prompt the latter to carry out the method according to one of Claims 5 to 8.

10. Computer-readable storage medium comprising commands which, when executed by a computer, prompt the latter to carry out the method according to one of Claims 5 to 8.

## Revendications

1. Système de gestion thermique (2) destiné à être utilisé dans un véhicule, le système de gestion thermique (2) comprenant un premier circuit de refroidissement (4) pour une batterie (10) et un second circuit de refroidissement (6) pour un moteur électrique (12) pour l'entraînement du véhicule, les deux circuits de refroidissement (4, 6) pouvant être branchés, au moyen d'une soupape à voies multiples (14), en série dans un premier mode du système (2) et dans une première position de soupape de la soupape à voies multiples (14) ou en parallèle l'un par rapport à l'autre dans un deuxième mode du système (2) et dans une deuxième position de soupape de la soupape à voies multiples (14),
la soupape à voies multiples (14) étant formée sous la forme d'une soupape à 4/2 voies et une autre soupape à voies multiples (18) étant prévue dans le second circuit de refroidissement (6) en aval du moteur électrique (12), laquelle guide un flux de liquide de refroidissement au choix par une voie (22) avec un radiateur (24) et/ou par une voie de dérivation (20) parallèle à celui-ci pour contourner le radiateur (24),
**caractérisé en ce que**
dans un troisième mode du système (2) et dans une troisième position de soupape, la soupape à 4/2 voies (14) peut être branchée dans une position intermédiaire, dans laquelle les flux de fluide de refroidissement des deux circuits de refroidissement (4, 6) se mélangent selon les besoins, la troisième position de soupape pouvant être réglée à partir d'une plage de réglage centrale de la soupape à voies multiples (14) avec une pluralité de positions intermédiaires possibles de la soupape à voies multiples (14) pour provoquer un mélange conforme aux besoins des flux de fluide de refroidissement des circuits de refroidissement (4, 6) (M = UC3).

2. Système de gestion thermique (2) selon la revendication 1, **caractérisé en ce que** l'autre soupape à voies multiples (18) est formée comme une soupape à 3/2 voies.

3. Système de gestion thermique (2) selon la revendication 1 ou 2, **caractérisé en ce que** les positions intermédiaires individuelles sont réglées par étapes ou en continu.

4. Véhicule avec un système de gestion thermique (2) selon l'une des revendications 1 à 3.

5. Procédé pour faire fonctionner deux circuits de refroidissement (4, 6) d'un système de gestion thermique (2) selon l'une des revendications 1 à 3, un premier circuit de refroidissement (4) pour une batterie (10) et un second circuit de refroidissement (6) pour un moteur électrique (12) étant prévus pour entraîner le véhicule, les deux circuits de refroidissement (4, 6) étant branchés, au moyen d'une soupape à voies multiples (14), en série dans un premier mode du système (2) et dans une première position de soupape de la soupape à voies multiples (14) ou en parallèle l'un par rapport à l'autre dans un deuxième mode du système (2) et dans une deuxième position de soupape de la soupape à voies multiples (14), une soupape à 4/2 voies étant utilisée comme soupape à voies multiples (14) et une autre soupape à voies multiples (18) étant utilisée dans le second circuit de refroidissement (6) en aval du moteur électrique (12), à travers laquelle un flux de liquide de refroidissement est guidé au choix par une voie (22) avec un radiateur (24) et/ou par une voie de dérivation (20) parallèle à celle-ci pour contourner le radiateur (24),
**caractérisé en ce que**
dans un troisième mode du système (2) et dans une troisième position de soupape, la soupape à 4/2 voies (14) est branchée dans une position intermédiaire, dans laquelle les flux de liquide de refroidissement des deux circuits de refroidissement (4, 6) sont mélangés l'un avec l'autre selon les besoins, la troisième position de soupape étant réglée à partir d'une plage de réglage centrale de la soupape à voies multiples (14) avec une pluralité de positions intermédiaires possibles de la soupape à voies multiples (14) pour provoquer un mélange conforme aux besoins des flux de liquide de refroidissement des deux circuits de refroidissement (4, 6) (M = UC3).

6. Procédé selon la revendication 5, **caractérisé en ce qu'**une soupape à 3/2 voies est utilisée pour l'autre soupape à voies multiples (18).

7. Procédé selon la revendication 5 ou 6, **caractérisé en ce que** les positions intermédiaires individuelles sont réglées par étapes ou en continu.

8. Procédé selon l'une des revendications 5 à 7, **caractérisé en ce qu'**un quatrième mode (ou mode de dérivation) et/ou un cinquième mode du système sont réglés, du liquide de refroidissement étant guidé dans le quatrième mode de chauffage de batterie (10), par la voie de dérivation (20), tandis que dans le cinquième mode de chauffage de batterie (10), du liquide de refroidissement est acheminé par la voie de radiateur (22).

9. Produit de programme d'ordinateur comprenant des instructions qui, lorsque le programme est exécuté par un ordinateur, amènent celui-ci à exécuter le procédé selon l'une des revendications 5 à 8.

10. Support de stockage lisible par ordinateur comprenant des instructions, qui, lorsqu'elles sont exécutées par un ordinateur, amènent celui-ci à exécuter le procédé selon l'une des revendications 5 à 8.
